# EUROPÄISCHE PATENTSCHRIFT

(11) **EP 2 977 716 B1**
(45) Veröffentlichungstag und Bekanntmachung des Hinweises auf die Patenterteilung: **12.10.2016**
(21) Anmeldenummer: 14002591.7
(22) Anmeldetag: 25.07.2014
(51) Int. Cl.: G01B 7/06, G01D 5/24

(54) **Vorrichtung und Verfahren zur Messung der Stapelhöhe von Druckmedien**
Device and method for measuring the stack height of print media
Procédé et dispositif destinés à mesurer la hauteur d'empilement d'un support d'impression

(43) Veröffentlichungstag der Anmeldung: 27.01.2016
(73) Patentinhaber: Pepperl + Fuchs GmbH, 68307 Mannheim (DE)
(72) Erfinder: Vater, Jochen, 68307 Mannheim (DE); Kurkovskiy, Igor, 68307 Mannheim (DE); Wieth, Hermann, 68307 Mannheim (DE)
(74) Vertreter: Koch Müller Patentanwaltsgesellschaft mbH

(56) Entgegenhaltungen:
- EP-A1- 2 020 605
- EP-A2- 2 241 868
- DE-A1-102006 047 827
- DE-U1-202010 009 712
- US-A1- 2009 046 827

## Beschreibung

Die Erfindung betrifft eine Vorrichtung zur Messung der Stapelhöhe von Druckmedien gemäß dem Oberbegriff des Anspruchs 1.

Aus der US 2009 / 0033340 A1 sind eine Schaltung und ein Verfahren zur Ermittlung der Kapazitätsänderung eines Kondensators eines RC-Glieds offenbart. Hierbei ist der Kondensator als Plattenkondensator zur Detektion einer Stapelhöhe oder der Dicke eines Druckmediums ausgelegt. Zur Ermittlung der Stapelhöhe wird von einer Steuerungseinheit der Messkreis bzw. das RC-Glied mit einem Strom oder Spannung aus der Steuerungseinheit beaufschlagt und die Ladezeit aus der Differenz des Zeitpunktes an dem der Strom bzw. die Spannung angelegt worden ist und dem Zeitpunkt an dem eine Spannungsänderung an dem Ausgang eines Komparators auftritt, errechnet. Indem eine Variation der Füllhöhe bzw. Stapelhöhe zwischen den Platten die Ladezeiten ändert, lässt sich aus der Bestimmung der Ladungszeitänderungen eine Aussage über die Stapelhöhe treffen. Hierbei ist es wünschenswert, die Sensitivität der Messung zu erhöhen, um eine genauere Bestimmung der Stapelhöhe zu erzielen.

Des Weiteren ist aus der DE 10 2009 017 011 A1 eine Schaltungsanordnung zur Bestimmung einer Messkapazität bekannt. Hierbei wird der Spannungsverlauf des Referenzzweiges mit dem Spannungsverlauf des Messkreises verglichen.

Vor diesem Hintergrund besteht die Aufgabe der Erfindung darin, eine Vorrichtung und ein Verfahren anzugeben, die jeweils den Stand der Technik weiterbilden.

Die Aufgabe wird durch eine Vorrichtung zur Messung von Ladungsänderungszeiten mit den Merkmalen des Anspruchs 1 und durch ein Verfahren mit den Merkmalen des Anspruchs 13 gelöst. Vorteilhafte Ausgestaltungen der Erfindung sind Gegenstand von Unteransprüchen.

Gemäß dem ersten Gegenstand der Erfindung wird eine Vorrichtung ausgebildet zur Messung der Stapelhöhe oder Dicke eines Druckmediums mittels einer Messung von Ladezeiten an einem Messkondensator bereitgestellt, wobei der Messkondensator mit einer zur Aufnahme von Druckmedien ausgebildeten ersten Platte und eine zweite Platte aufweist, wobei die erste Platte mit dem Bezugspotential verschaltet ist, und ein Messkreis mit einem Messverstärker mit einem Ausgang, und einem Messwiderstand und dem Messkondensator vorgesehen ist, wobei der Messwiderstand und der Messkondensator ein erstes RC-Glied ausbilden, und ein Komparator, der einen ersten Eingang und einen Ausgang aufweist, vorgesehen ist, wobei der erste Eingang mit dem Ausgang des Messverstärkers verschaltet ist, und eine Steuerungseinheit vorgesehen ist, wobei die Steuerungseinheit mit dem Ausgang des Komparators und mittels eines ersten Ausgang mit dem ersten RC-Glied verschaltet ist und wobei die Steuerungseinheit zu einem ersten Zeitpunkt das erste RC-Glied mittels des ersten Ausgangs mit einem Ladestrom beaufschlagt, wobei die Steuerungseinheit eingerichtet ist, die an einem zweiten Zeitpunkt am Ausgang des Komparators auftretende erste Spannungsänderung zu detektieren, um aus der Differenz des ersten Zeitpunkts und des zweiten Zeitpunkts eine Ladezeit zu ermitteln, wobei der Komparator einen mit der Steuerungseinheit verbundenen zweiten Eingang aufweist und mittels der Steuerungseinheit an den zweiten Eingangs während des Anliegens des Ladestroms eine erste Referenzspannung angelegt ist, und mittels der Steuerungseinheit zu einem dritten Zeitpunkt das RC-Glied mit einem Entladestrom beaufschlagt ist und während des Anliegens des Entladestroms mittels der Steuerungseinheit eine zweite Referenzspannung an den zweiten Eingang angelegt ist und mittels der Steuerungseinheit die zu einem vierten Zeitpunkt am Ausgang des Komparators auftretende zweite Spannungsänderung zu detektieren, um aus der Differenz des dritten Zeitpunkts und des vierten Zeitpunkts eine Entladezeit und eine erste Korrekturgröße aus dem Verhältnis der Ladezeit und der Entladezeit zu ermitteln, und um die Ladezeit und / oder die Entladezeit mittels der ersten Korrekturgröße zu korrigieren und die Stapelhöhe oder die Dicke des Druckmediums aus einem Vergleich der korrigierten Ladezeit und / oder Entladezeit und einem gespeicherten Referenzzeit zu ermitteln. Vorzugsweise ist die Stapelhöhe als das n-fache einer minimalen Dicke gegeben.

Gemäß dem zweiten Gegenstand der Erfindung wird ein Verfahren zur Messung der Stapelhöhe oder der Dicke eines Druckmediums mittels einer Messung von Ladezeiten an einem Messkondensators, bereitgestellt, wobei der Messkondensator eine Aufnahme von Druckmedien ausgebildeten ersten Platte und eine zweite Platte aufweist, und die erste Platte mit dem Bezugspotential verschaltet ist und ein Messkreis, mit einem Messverstärker mit einem Ausgang und einem Messwiderstand und der Messkondensator vorgesehen ist, wobei der Messwiderstand und der Messkondensator ein erstes RC-Glied ausbilden, und ein Komparator mit einem ersten Eingang und einem Ausgang vorgesehen ist, wobei der erste Eingang des Komparators mit dem Ausgang des Messverstärkers in einem ersten Zustand verschaltet wird, und eine mit dem Ausgang des Komparators verschaltete Steuerungseinheit vorgesehen ist, wobei die Steuerungseinheit mittels eines ersten Ausgang mit dem ersten RC-Glied verschaltet ist und wobei mittels der Steuerungseinheit zu einem ersten Zeitpunkt das erste RC-Glied mittels des ersten Ausgangs mit einem Ladestrom beaufschlagt wird und mittels der Steuerungseinheit die an einem zweiten Zeitpunkt am Ausgang des Komparators auftretende erste Spannungsänderung detektiert wird und mittels der Steuerungseinheit aus der Differenz des ersten Zeitpunkts und des zweiten Zeitpunkts eine Ladezeit ermittelt wird, und der Komparator einen mit der Steuerungseinheit verbundenen zweiten Eingang aufweist und mittels der Steuerungseinheit an den zweiten Eingang während des Anliegens des Ladestroms eine erste Referenzspannung angelegt wird, und mittels der Steuerungseinheit zu einem dritten Zeitpunkt das RC-Glied mit einem Entladestrom beaufschlagt wird und während des Anliegens des Entladestroms mittels der Steuerungseinheit eine zweite Referenzspannung an den zweiten Eingang angelegt wird und mittels der Steuerungseinheit die zu einem vierten Zeitpunkt am Ausgang des Komparators auftretende zweite Spannungsänderung detektiert wird und mittels der Steuerungseinheit aus der Differenz des dritten Zeitpunkts und des vierten Zeitpunkts eine Entladezeit ermittelt wird und mittels der Steuerungseinheit eine erste Korrekturgröße aus dem Verhältnis der Ladezeit und der Entladezeit ermittelt wird und die Ladezeit und / oder die Entladezeit mittels der ersten Korrekturgröße korrigiert wird und die Stapelhöhe oder die Dicke des Druckmediums aus einem Vergleich der korrigierten Ladezeit und / oder Entladezeit und einer gespeicherten Referenzzeit ermittelt wird.

Es versteht sich, dass die zweiten Zeitpunkte und vierten Zeitpunkte, diejenigen Zeitpunkte sind, an denen die steigende bzw. die fallende Spannung an dem RC-Glied, die an dem Komparator anliegenden ersten Referenzspannungswerte oder zweiten Referenzspannungswerte durchläuft. Hierbei ist der zweite Zeitpunkt als derjenige Zeitpunkt gegeben, an welchem die Höhe der ansteigenden Spannung im Wesentlichen gleich einer ersten Referenzspannung ist. Ferner ist der vierte Zeitpunkt als derjenige Zeitpunkt gegeben, an welchem die Höhe der abfallenden Spannung im Wesentlichen gleich einer zweiten Referenzspannung entspricht, wobei die zweite Referenzspannung kleiner als die erste Referenzspannung ist. In einer Weiterbildung ist die Höhe der ersten Referenzspannung und / oder die Höhe der zweiten Referenzspannung einstellbar ausgeführt.

Ein Vorteil der erfindungsgemäßen Vorrichtung ist es, dass sich mittels dem Verhältnis der Ladezeit zur der Entladezeit eine Störung wie einen Offset oder Störstrom, welche die Ermittlung der Lade- / Entladezeit verfälscht, sich im Vergleich zu den Lade / Entladezyklen insbesondere das Vorzeichen und Größe der Störung langsamer ändert und hierdurch sich die Störung weitestgehend eliminieren lässt. Untersuchungen der Anmelderin haben gezeigt, dass sich die Empfindlichkeit der Messvorrichtung bzw. des Messverfahrens mittels der Korrektur der Lade-/ Entladezeit erhöht. Störungen sind beispielsweise durch eine statische Aufladung der Druckmedien bedingt.

In einer Weiterbildung ist die Steuerungseinheit eingerichtet, das Verhältnis aus einer unmittelbar auf die Ladezeit folgende Entladezeit zu bestimmen. Hierdurch wird die Korrektur von Störgrößen besonders exakt, indem nur wenig Zeit zwischen dem auf einen Ladezyklus folgenden Entladzyklus verstreicht ist eine Veränderung der Störung zwischen den beiden Zyklen besonders klein und die Korrektur der Lade- / Entladezeiten verbessert sich.

In einer anderen Weiterbildung wird aus der Kenntnis der Größe der Störung und folglich der ersten Korrekturgröße mittels der Steuerungseinheit die Ladekennlinie und / oder die Entladekennlinie korrigiert. Insbesondere bei sich veränderten Stapelhöhen von den Druckmedien lassen sich die unterschiedlichen Höhen nacheinander bestimmen, ohne dass zwischendurch eine Korrektur der Lade- Entladezeiten durchgeführt werden muss. Gemäß einer anderen Weiterbildung ist es vorteilhaft den Ladestrom im Wesentlichen gleich groß zu dem Entladestrom zu wählen. Hierdurch lässt sich die Genauigkeit der Bestimmung der Lade- Entladezeiten erhöhen.

In einer Ausführungsform weist der Messwiderstand einen ersten mit der Steuerungseinheit verschalteten Anschluss und einen mit einer ersten Platte des Messkondensators verschalteten zweiten Anschluss und eine mit einem Bezugspotential verschaltete zweite Platte auf. Hierbei weist die zweite Platte eine für die Aufnahme von Druckmedien äquidistant zu der Fläche der ersten Platte beabstandete Fläche auf und der zweite Anschluss ist mit einem Eingang des Messverstärkers verschaltet. Des Weiteren ist ein Ausgang des Messverstärkers mit dem ersten Eingang des Komparators verschaltet. Gemäß einer weiteren Ausbildung ist der Ausgang des Messverstärkers mit einem Eingang eines Entkopplungsverstärkers verschaltet und ein Ausgang des Entkopplungsverstärkers ist mit einer Schirmelektrode, welche den Messkondensator abschirmt, verschaltet.

In einer besonders bevorzugten Ausführungsform ist ein Referenzzweig mit einem zweiten RC-Glied und einem Referenzverstärker mit einem Ausgang vorgesehen ist, und die Steuerungseinheit mittels des Ausgangs zu dem ersten Zeitpunkt das zweite RC-Glied mit dem Ladestrom oder dem Entladestrom beaufschlagt und in dem ersten Zustand mittels eines Schalters den Ausgang des Messverstärkers oder in einem zweiten Zustand den Ausgang des Referenzverstärkers mit dem Eingang des Komparators verbindet. Ein Vorteil ist, dass in dem Referenzkreis keine Beeinflussung der Lade- und / oder Entladezeiten durch Druckmedien stattfindet, und sich durch die Bestimmung der Änderung der Ladungsänderungszeiten an dem Referenzkreis, Alterungseinflüsse und / oder Umgebungseinflüsse, insbesondere durch Temperatur und Luftfeuchtigkeit, ermitteln lassen. Hierzu werden Ladungsänderungszeiten, d.h. die Lade- und / oder Entladezeitänderung eines Referenzkondensators an dem Referenzkreis aus einer oder mehreren Messungen bestimmt und zur wenigstens teilweisen Kompensation eines Offsets bei dem Messkreis verwendet. Es lässt sich eine besonders gute Kompensation bei dem Messkreis erzielen, wenn die elektronischen Bauelemente des Referenzkreises denen des Messkreises möglichst gleichen.

In einer bevorzugten Ausführungsform wird bei dem Referenzkreis ein Anfangswert bestimmt und in nachfolgenden Messungen nur die Differenz zu dem Anfangswert, d.h. der sogenannte Offset ermittelt. Des Weiteren lässt sich derart bestimmte Offset von den jeweiligen Messwerten des Messkreises subtrahieren. Des Weiteren ist es vorteilhaft, die Offset-Bestimmung alternierend mit den Messungen an dem Messkreis, mittels denen die Dicke von Druckmedien, insbesondere Papier, bestimmt wird, durchzuführen. Hierdurch lassen sich die Änderungen der Lade- und / oder Entladezeiten am Referenzkreis unmittelbar auf nachfolgenden Messungen am Messkreis übernehmen. Mittels der erfindungsgemäßen Kompensation lässt sich die Empfindlichkeit bzw. die Auflösung der Messungen innerhalb des Messkreises erhöhen und hierdurch die Zuverlässigkeit und Genauigkeit der Messung von Stapelhöhen bei Druckmedien zusätzlich verbessern.

In einer anderen Ausführungsform weist das zweite RC-Glied einen Referenzwiderstand mit einem ersten Anschluss und einem zweiten Anschluss und den Referenzkondensator, mit einer ersten Platte und einer zweiten Platte auf, wobei die zweite Platte mit einem Bezugspotential verschaltet ist und der zweite Anschluss mit der ersten Platte verschaltet ist. In einer anderen Weiterbildung weist der Referenzverstärker einen mit dem zweiten Anschluss des Referenzwiderstandes verschalteten Eingang auf. Gemäß einer Ausführungsform weist der Messverstärker einen mit dem zweiten Anschluss des Messwiderstandes verschalteten Eingang auf. Des Weiteren weist vorzugsweise der Schalter einen mit der Steuerungseinheit verschalteten Steuereingang auf.

In einer Weiterbildung ist die Höhe der ersten Referenzspannung und / oder die Höhe der zweiten Referenzspannung einstellbar. Hierdurch lässt sich die Messzeiten für die Lade- / Entladezeiten ändern. Indem die erste Referenzspannung verringert wird, verringert sich bei gleicher Stapelhöhe ebenfalls die Ladezeit. Indem die zweite Referenzspannung erhöht wird, verringert sich bei gleicher Stapelhöhe die Entladezeit.

Gemäß einer anderen Weiterbildung, sind der Ausgang des Messverstärkers mit einem Eingang eines Entkopplungsverstärkers und ein Ausgang des Entkopplungsverstärkers mit einer Schirmelektrode, welche den Messkondensator abschirmt, verschaltet. Des Weiteren ist es bevorzugt, dass die Steuerungseinheit mit dem Ausgang des Komparators verschaltet ist. Außerdem ist es bevorzugt, dass der Komparator einen zweiten Eingang aufweist, der mit einer ersten Referenzspannung und / oder mit einer zweiten Referenzspannung verschaltet ist.

Es sei angemerkt, dass sich aus einer Kombination der Kompensation des Offsets an dem Messkreis mit Hilfe von Messungen an dem Referenzkreis und der Berechnung des ersten Korrekturgröße aus dem Verhältnis der Ladezeit mit der Entladezeit die Genauigkeit der Vorrichtung zur Messung der Stapelhöhe stärker erhöhen lässt, als wenn nur eine einzige Art der Korrektur durchgeführt wird.

Die Erfindung wird nachfolgend unter Bezugnahme auf die Zeichnungen näher erläutert. Hierbei werden gleichartige Teile mit identischen Bezeichnungen beschriftet. Die dargestellte Ausführungsformen sind stark schematisiert, d.h. die Abstände und die lateralen und die vertikalen Erstreckungen sind nicht maßstäblich und weisen, sofern nicht anders angegeben auch keine ableitbare geometrische Relation zueinander auf. Darin zeigt:
- Figur 1: eine erste schematische Vorrichtung zur Ermittlung der Stapelhöhe,
- Figur 2: einen zeitlichen Verlauf der Spannungen an ausgewählten Punkten der Vorrichtung der Figur 1,
- Figur 3: eine weitere Ausführungsform mit einem Referenzkreis.

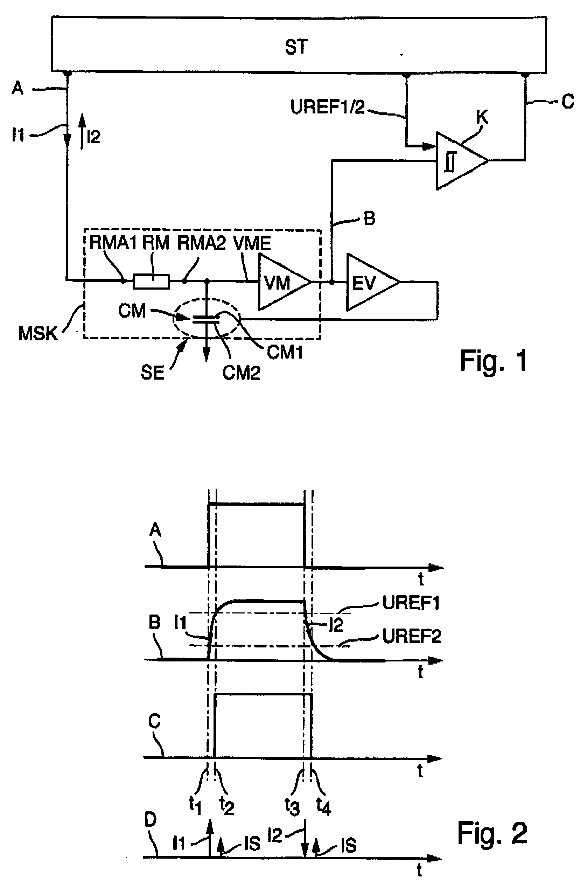

Die Abbildung der Figur 1 zeigt eine Ausführungsform der Schaltungsanordnung, aufweisend einen Messkreis MSK mit einem ersten RC-Glied und einem Messverstärker VM mit einem Ausgang, einen Komparator K, der einen Eingang und einen Ausgang C aufweist, wobei der Eingang mit dem Ausgang des Messverstärkers VM verbindbar ist, eine Steuerungseinheit ST mit einem Ausgang A, die das erste RC-Glied mit einem Ladestrom I1 oder mit einem Entladestrom I2 beaufschlagt und eingerichtet ist, am Ausgang C des Komparators K auftretende Spannungsänderung zu detektieren. Des Weiteren ist der Ausgang des Messverstärkers VM mit dem Eingang des Komparators K verschaltet. Zusätzlich ist der Ausgang des Messverstärkers VM mit einem Eingang eines Entkopplungsverstärkers EV verschaltet und ein Ausgang des Entkopplungsverstärkers EV ist mit einer Schirmelektrode SE, welche den Messkondensator VM abschirmt, verschaltet. Hierzu weist das erste RC-Glied einen Messwiderstand RM mit einem ersten Anschluss RMA1 und einem zweiten Anschluss RMA2 und einen Messkondensator CM, mit einer ersten Platte CM1 und einer zweiten Platte CM2 auf, wobei die zweite Platte CM2 mit einem Bezugspotential GND verschaltet und als im Wesentlichen zur ersten Platte CM1 gleich beabstandete Fläche zur Aufnahme von Druckmedien ausgebildet ist und ferner ist der zweite Anschluss RMA2 mit der ersten Platte CM1 verschaltet. Des Weiteren weist der Messverstärker VM einen mit dem zweiten Anschluss RMA2 des Messwiderstandes RM verschalteten Eingang VME auf. Außerdem weist der Komparator K einen zweiten Eingang auf, der mit einem ersten Referenzpotential UREF1 oder einem zweiten Referenzpotential UREF2 mit der Steuerungseinheit ST verschaltet ist. Es ist bevorzugt die Referenzpotentiale UREF1 und UREF2 einstellbar einzurichten.

Mittels des schematisiert dargestellten Messkondensators CM und dessen mit dem Bezugspotential verschalteten zweiten Platte CM2 ausgebildet als Auflagefläche für das Druckmedium dessen Stapelhöhe zu bestimmen ist, wird als Ausgangspunkt zur Bestimmung der Stapelhöhe ein Ladestrom I1 angelegt. Hierbei wird der erste Schwellwert UREF1 umso später erreicht, d.h. die Ladezeit ist umso größer, je höher die relative Dielektrizitätskonstante des Druckmediums und die Stapelhöhe ist. Sobald das Potential am ersten Eingang des Komparators K die erste Referenzspannung UREF 1 erreicht, ändert sich am Ausgang C des Komparators K die Spannung. Aus der Zeit zwischen Anlegen des Ladestrom I1 und der Spannungsänderung am Ausgang C des Komparators K ergibt sich die Ladezeit. Entsprechendes gilt für den Entladezeitraum; sobald in dem geladen Zustand des Messkondensators CM der Entladestrom I2 von der Steuerungseinheit ST angelegt wird beginnt der Entladezeitraum. Hierbei wird der zweite Schwellwert UREF2 umso später erreicht, d.h. die gemessene Entladezeit ist umso größer, je höher die relative Dielektrizitätskonstante des Druckmediums und die Stapelhöhe ist. Sobald das Potential am ersten Eingang des Komparators K die zweite Referenzspannung UREF2 erreicht, ändert sich am Ausgang C des Komparators K wiederum die Spannung. Aus der Zeit zwischen Anlegen des Entladestrom I2 und der Spannungsänderung am Ausgang C des Komparators K ergibt sich die Entladezeit. Aus dem Unterschied, insbesondere aus dem Verhältnis von der Ladezeit zu der Entladezeit, lässt sich, unter der Annahme einer in einer ersten Näherung zeitlich konstanten Störung und einer konstanten Stapelhöhe insbesondere während eines Lade- Entladezeitraums, die Höhe der Störung ermitteln und die Ladezeit bzw. die Entladezeit entsprechend korrigieren. Hiernach lässt sich anschließend eine korrigierte Stapelhöhe ermitteln.

In der Abbildung der Figur 2 sind die zeitlichen Verläufe der Spannungen schematisch für ausgewählte Punkte der Schaltungsanordnung dargestellt. In einem ersten Zustand wird gemäß der Darstellung in der oberen Abbildung der Figur 2 am Ausgang A der Steuerungseinheit ST zu einem Zeitpunkt t1 eine rechteckförmige Spannung an das erste RC Glied angelegt, d. h. der Kondensator CM wird mittels des Ladestroms I1 geladen. Eine zugehörige beispielhafte Ladezeitkurve, dargestellt in der mittleren Abbildung der Figur 2, aufgenommen an dem Punkt B der Schaltungsanordnung d.h. am Ausgang des Messverstärkers VM zeigt, dass zu einem Zeitpunkt t2 der steigende Spannungsverlauf am Ausgang des Messverstärkers VM eine am Komparator K anliegende erste Referenzspannung UREF1 schneidet. Der zugehörige Spannungsverlauf am Ausgang des Komparators K ist in der unteren Darstellung für den Eingang C der Steuerungseinheit ST dargestellt. Aus der Differenz der beiden Zeitpunkte t1 und t2 lässt sich die zugehörige Ladezeit ermitteln.

Des Weiteren wird in einem zweiten Zustand gemäß der Darstellung in der oberen Abbildungsteil der Figur 2 am Ausgang A der Steuerungseinheit ST zu einem Zeitpunkt t3 die rechteckförmige Spannung an das erste RC Glied auf ein Bezugspotential, vorzugsweise Massepotential geschaltet, d. h. der Kondensator CM wird entladen. Eine zugehörige beispielhafte Entladezeitkurve, dargestellt in dem zweiten Abbildungsteil der Figur 2, aufgenommen an dem Punkt B der Schaltungsanordnung d.h. am Ausgang des Messverstärkers VM zeigt, dass zu einem Zeitpunkt t4 der fallende Spannungsverlauf am Ausgang des Messverstärkers VM eine am Komparator K anliegende Referenzspannung UREF2 schneidet. Der zugehörige Spannungsverlauf am Ausgang des Komparators K ist in dem dritten Abbildungsteil für den Eingang C der Steuerungseinheit ST dargestellt. Aus der Differenz der beiden Zeitpunkte t3 und t4 lässt sich die zugehörige Entladezeit ermitteln.

In dem vierten - untersten - Abbildungsteil ist der Einfluss eines Störstroms IS auf
den Ladestrom I1 und den Entladestrom I2 dargestellt. Es zeigt sich gemäß dem vorliegenden Beispiel, dass der Störstrom IS zu einer Erhöhung des Ladestroms I1 und zu einer Erniedrigung des Entladestroms I2 führt. Demgemäß ist die Ladezeit gegenüber der Entladezeit verkürzt. Hierdurch lässt sich unter Annahme, dass die Stapelhöhe bei beiden Zeiten gleich hoch ist, sowohl die Lade- als auch die Entladezeit korrigieren. Anschließend lässt sich auch die eine korrigierte Stapelhöhe ermitteln.

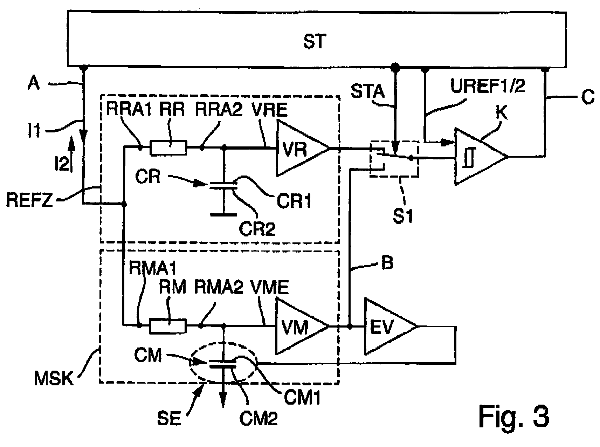

In der Abbildung der Figur 3 wird eine weitere Ausführungsform der erfindungsgemäßen Vorrichtung dargestellt. Im Folgenden werden nur die Unterschiede zu der Darstellung in der Figur 1 erläutert. Bei einem Referenzzweig REFZ mit einem zweiten RC-Glied und einen Referenzverstärker VR mit einem Ausgang wird von der Steuerungseinheit ST mittels des Ausgangs A der Steuerungseinheit ST das zweite RC-Glied gleichzeitig mit dem ersten RC-Glied mit dem Ladestrom I1 oder mit einem Entladestrom I2 beaufschlagt und mittels eines Schalters S1 wird entweder der Ausgang des Messverstärkers VM oder den Ausgang des Referenzverstärkers VR mit dem Eingang des Komparators K verbunden. Des Weiteren weist das zweite RC-Glied einen Referenzwiderstand RR mit einem ersten Anschluss RRA1 und einem zweiten Anschluss RRA2 und einen Messkondensator CR, mit einer ersten Platte CR1 und einer zweiten Platte CR2, auf, wobei die zweite Platte CR2 mit einem Bezugspotential GND und der zweite Anschluss RRA2 mit der ersten Platte CR1 verschaltet ist.

Außerdem weist der Referenzverstärker VR einen mit dem zweiten Anschluss RRA2 des Referenzwiderstandes RR verschalteten Eingang VRE auf. Ferner weist der Schalter S1 einen mit der Steuerungseinheit ST verschalteten Steuereingang STA auf.

Aus einer Änderung von zwei aufeinanderfolgenden Ladezeiten, ermittelt am Referenzkreis REFZ, lässt sich ein Offset des Referenzkreises REFZ bestimmen und zur Kompensation eines Offsets am Messkreis verwenden, indem eine Subtraktion des Messwertes des Messkreises mit dem Offset des Referenzkreises durchgeführt wird. Hierbei ist es bevorzugt, an dem Referenzzweig den Offset in Bezug auf einen Anfangswert zu bestimmen.

Alternativ oder zusätzlich lässt sich eine Kompensation auch aus der Entladezeitänderung von aufeinanderfolgenden Messungen an dem Referenzkreis durchführen. Hierzu wird in einem zweiten Zustand gemäß der Darstellung in der oberen Abbildung der Figur 2 am Ausgang A der Steuerungseinheit ST zu einem Zeitpunkt t3 die rechteckförmige Spannung an die beiden RC Glieder auf ein Bezugspotential, vorzugsweise Massepotential geschaltet, d. h. die Kondensatoren CM und CR werden entladen. Eine zugehörige beispielhafte Entladezeitkurve, dargestellt in der mittleren Abbildung der Figur 2, aufgenommen an dem Punkt B der Schaltungsanordnung d.h. am Ausgang des Messverstärkers VM zeigt, dass zu einem Zeitpunkt t4 der fallende Spannungsverlauf am Ausgang des Messverstärkers VM eine am Komparator K anliegende Referenzspannung UREF2 schneidet. Der zugehörige Spannungsverlauf am Ausgang des Komparators K ist In der unteren Darstellung für den Eingang C der Steuerungseinheit ST dargestellt. Aus der Differenz der beiden Zeitpunkte t3 und t4 lässt sich die zugehörige Entladezeit ermitteln. Aus einem Vergleich von zwei aufeinanderfolgenden Entladezeiten, ermittelt am Referenzkreis REFZ, lässt sich ein Offset an dem Referenzkreis REFZ bestimmen und zur Kompensation eines Offsets am Messkreis verwenden. Hierbei ist es bevorzugt, am Referenzkreis REFZ die Änderung bzw. den Offset in Bezug auf einen Anfangswert zu bestimmen.

## Patentansprüche

1. Vorrichtung ausgebildet zur Messung der Stapelhöhe oder Dicke eines Druckmediums (DST) mittels einer Messung von Ladezeiten eines Messkondensators (CM), aufweisend,
- den Messkondensator (CM) mit einer zur Aufnahme von Druckmedien ausgebildeten ersten Platte (CM1), wobei die erste Platte (CM1) mit dem Bezugspotential (GND) verschaltet ist und mit einer zweiten Platte (CM2),
- einen Messkreis (MSK), mit einem Messverstärker (VM) mit einem Ausgang und einem Messwiderstand (RM) und der Messkondensator (CM), wobei der Messwiderstand (RM) und der Messkondensator (CM) ein erstes RC-Glied ausbilden,
- einen Komparator (K), der einen ersten Eingang (B1) und einen Ausgang (C) aufweist, wobei der erste Eingang (B1) des Komparators (K) mit dem Ausgang des Messverstärkers (VM) verschaltet ist,
- eine Steuerungseinheit (ST), welche mit dem Ausgang (C) des Komparators und mittels eines ersten Ausgang (A) mit dem ersten RC-Glied verschaltet ist und wobei die Steuerungseinheit (ST) zu einem ersten Zeitpunkt (t1) das erste RC-Glied mittels des ersten Ausgangs (A) mit einem Ladestrom (I1) beaufschlagt, wobei die Steuerungseinheit (ST) eingerichtet ist, die an einem zweiten Zeitpunkt (t2) am Ausgang (C) des Komparators (K) auftretende erste Spannungsänderung zu detektieren und aus der Differenz des ersten Zeitpunkts (t1) und des zweiten Zeitpunkts (t2) eine Ladezeit zu ermitteln
**dadurch gekennzeichnet, dass**
der Komparator (K) einen mit der Steuerungseinheit (ST) verbundenen zweiten Eingang (B2) aufweist und mittels der Steuerungseinheit (ST) an den zweiten Eingang (B2) während des Anliegens des Ladestroms (I1) eine erste Referenzspannung (UREF1) angelegt ist, und
mittels der Steuerungseinheit (ST) zu einem dritten Zeitpunkt (t3) das RC-Glied mit einem Entladestrom (I2) beaufschlagt ist und während des Anliegens des Entladestroms (I2) mittels der Steuerungseinheit (ST) eine zweite Referenzspannung (UREF2) an den zweiten Eingang (B2) angelegt ist und mittels der Steuerungseinheit (ST) die zu einem vierten Zeitpunkt (t4) am Ausgang (C) des Komparators (K) auftretende zweite Spannungsänderung zu detektieren und aus der Differenz des dritten Zeitpunkts (t3) und des vierten Zeitpunkts (t4) eine Entladezeit zu ermitteln, und
eine erste Korrekturgröße aus dem Verhältnis der Ladezeit und der Entladezeit zu ermitteln, um die Ladezeit und / oder die Entladezeit mittels der ersten Korrekturgröße zu korrigieren und die Stapelhöhe oder die Dicke des Druckmediums aus einem Vergleich der korrigierten Ladezeit und / oder Entladezeit und einer gespeicherten Referenzzeit zu ermitteln.

2. Vorrichtung nach Anspruch 1, **dadurch gekennzeichnet, dass** die Steuerungseinheit (ST) eingerichtet ist, das Verhältnis aus einer unmittelbar auf die Ladezeit folgende Entladezeit zu bestimmen.

3. Vorrichtung nach Anspruch 1 oder Anspruch 2, **dadurch gekennzeichnet, dass** die Steuerungseinheit (ST) eingerichtet ist, mittels der ersten Korrekturgröße die Ladekennlinie und / oder die Entladekennlinie zu korrigieren.

4. Vorrichtung nach einem der vorangegangen Ansprüche, **dadurch gekennzeichnet, dass** der Ladestrom (I1) und der Entladestrom (I2) im Wesentlichen gleich groß ist.

5. Vorrichtung nach einem der vorangegangen Ansprüche, **dadurch gekennzeichnet, dass** der Messwiderstand (RM) einen ersten mit der Steuerungseinheit (ST) verschalteten Anschluss (RMA1) aufweist und der Messwiderstand (RM) einen mit einer ersten Platte (CM1) des Messkondensators (CM) verschalteten zweiten Anschluss (RMA2) aufweist und der Messkondensator (CM) eine mit einem Bezugspotential (GND) verschaltete zweite Platte (CM2) aufweist, wobei die zweite Platte (CM2) eine für die Aufnahme von Druckmedien äquidistant zu der Fläche der ersten Platte (CM1) beabstandete Fläche aufweist und der zweite Anschluss (RMA2) mit einem Eingang (VME) des Messverstärkers (VM) verschaltet ist und ein Ausgang des Messverstärkers (VM) mit dem ersten Eingang (B1) des Komparators (K) verschaltet ist.

6. Vorrichtung nach einem der vorangegangen Ansprüche, **dadurch gekennzeichnet, dass** der Ausgang des Messverstärkers (VM) mit einem Eingang eines Entkopplungsverstärkers (EV) verschaltet ist und ein Ausgang des Entkopplungsverstärkers (EV) mit einer Schirmelektrode (SE), welche den Messkondensator (VM) abschirmt, verschaltet ist.

7. Vorrichtung nach einem der vorangegangen Ansprüche, **dadurch gekennzeichnet, dass** ein Referenzzweig (REFZ) mit einem zweiten RC-Glied und einem Referenzverstärker (VR) mit einem Ausgang vorgesehen ist, und die Steuerungseinheit (ST) mittels des Ausgangs (A) zu dem ersten Zeitpunkt (t1) das zweite RC-Glied mit dem Ladestrom (I1) oder dem Entladestrom (12) beaufschlagt und in dem ersten Zustand mittels eines Schalters (S1), den Ausgang des Messverstärkers (VM) oder in einem zweiten Zustand den Ausgang des Referenzverstärkers (VR) mit dem Eingang des Komparators (K) verbindet.

8. Vorrichtung nach Anspruch 7, **dadurch gekennzeichnet, dass** das zweite RC-Glied einen Referenzwiderstand (RR) mit einem ersten Anschluss (RRA1) und einem zweiten Anschluss (RRA2) und einen Referenzkondensator (CR), mit einer ersten Platte (CR1) und einer zweiten Platte (CR2) aufweist, wobei die zweite Platte (CR2) mit einem Bezugspotential (GND) verschaltet ist und der zweite Anschluss (RRA2) mit der ersten Platte (CR1) verschaltet ist.

9. Vorrichtung nach Anspruch 7 oder Anspruch 8, **dadurch gekennzeichnet, dass** der Referenzverstärker (VR) einen mit dem zweiten Anschluss (RRA2) des Referenzwiderstandes (RR) verschalteten Eingang (VRE) aufweist.

10. Vorrichtung nach einem der Ansprüche 7 bis 9, **dadurch gekennzeichnet, dass** der Messverstärker (VM) einen mit dem zweiten Anschluss (RMA2) des Messwiderstandes (RM) verschalteten Eingang (VME) aufweist.

11. Vorrichtung nach einem der Ansprüche 7 bis 10, **dadurch gekennzeichnet, dass** der Schalter (S1) einen mit der Steuerungseinheit (ST) verschalteten Steuereingang (STA) aufweist.

12. Vorrichtung nach einem der vorangegangen Ansprüche, **dadurch gekennzeichnet, dass** die Höhe der ersten Referenzspannung (UREF1) und / oder die Höhe der zweiten Referenzspannung (UREF2) einstellbar ist.

13. Verfahren zur Messung der Stapelhöhe oder der Dicke eines Druckmediums (DST) mittels einer Messung von Ladezeiten an einem Messkondensators (CM), aufweisend,
- den Messkondensator (CM) mit einer zur Aufnahme von Druckmedien ausgebildeten ersten Platte (CM1), wobei die erste Platte (CM1) mit dem Bezugspotential (GND) verschaltet ist und mit einer zweiten Platte (CM2),
- einen Messkreis (MSK), mit einem Messverstärker (VM) mit einem Ausgang und einem Messwiderstand (RM) und der Messkondensator (CM), wobei der Messwiderstand (RM) und der Messkondensator (CM) ein erstes RC-Glied ausbilden,
- einen Komparator (K), der einen ersten Eingang (B1) und einen Ausgang (C) aufweist, wobei der erste Eingang (B1) des Komparators (K) mit dem Ausgang des Messverstärkers (VM) in einem ersten Zustand verschaltet wird,
- eine mit dem Ausgang (C) des Komparators verschaltete Steuerungseinheit (ST) und wobei die Steuerungseinheit (ST) mittels eines ersten Ausgang (A) mit dem ersten RC-Glied verschaltet ist und wobei mittels der Steuerungseinheit (ST) zu einem ersten Zeitpunkt (t1) das erste RC-Glied mittels des ersten Ausgangs (A) mit einem Ladestrom (I1) beaufschlagt wird und mittels der Steuerungseinheit (ST) die an einem zweiten Zeitpunkt (t2) am Ausgang (C) des Komparators (K) auftretende erste Spannungsänderung detektiert wird und mittels der Steuerungseinheit (ST) aus der Differenz des ersten Zeitpunkts (t1) und des zweiten Zeitpunkts (t2) eine Ladezeit ermittelt wird,
**dadurch gekennzeichnet, dass**
der Komparator (K) einen mit der Steuerungseinheit (ST) verbundenen zweiten Eingang (B2) aufweist und mittels der Steuerungseinheit (ST) an den zweiten Eingang (B2) während des Anliegens des Ladestroms (I1) eine erste Referenzspannung (UREF1) angelegt wird, und
mittels der Steuerungseinheit (ST) zu einem dritten Zeitpunkt (t3) das RC-Glied mit einem Entladestrom (I2) beaufschlagt wird und während des Anliegens des Entladestroms (I2) mittels der Steuerungseinheit (ST) eine zweite Referenzspannung (UREF2) an den zweiten Eingang (B2) angelegt wird und mittels der Steuerungseinheit (ST) die zu einem vierten Zeitpunkt (t4) am Ausgang (C) des Komparators (K) auftretende zweite Spannungsänderung detektiert wird und mittels der Steuerungseinheit (ST) aus der Differenz des dritten Zeitpunkts (t3) und des vierten Zeitpunkts (t4) eine Entladezeit ermittelt wird und mittels der Steuerungseinheit (ST) eine erste Korrekturgröße aus dem Verhältnis der Ladezeit und der Entladezeit ermittelt wird und die Ladezeit und / oder die Entladezeit mittels der ersten Korrekturgröße korrigiert wird und die Stapelhöhe oder die Dicke des Druckmediums aus einem Vergleich der korrigierten Ladezeit und / oder Entladezeit und einer gespeicherten Referenzzeit ermittelt wird.

14. Verfahren nach Anspruch 13, **dadurch gekennzeichnet, dass** mittels der Steuerungseinheit (ST) das Verhältnis aus einer unmittelbar auf die Ladezeit folgende Entladezeit bestimmt wird.

15. Verfahren nach Anspruch 13 oder Anspruch 14, **dadurch gekennzeichnet, dass** mittels der Steuerungseinheit (ST) die Ladekennlinie und / oder die Entladekennlinie anhand der ersten Korrekturgröße korrigiert wird.

## Claims

1. Device constructed for measuring the stack height or thickness of a print medium (DST) by means of measurement of charge times of a measuring capacitor (CM), comprising:
- the measuring capacitor (CM) with a first plate (CM1) constructed for reception of print media, the first plate (CM1) being connected with the reference potential (GND), and with a second plate (CM2),
- a measuring circuit (MSK), with a measuring amplifier (VM) with an output and a measuring resistor (RM) and the measuring capacitor (CM), wherein the measuring resistor (RM) and the measuring capacitor (CM) form a first RC element,
- a comparator (K) having a first input (B1) and an output (C), wherein the first input (B1) of the comparator (K) is connected with the output of the measuring amplifier (VM), and
- a control unit (ST), which is connected with the output (C) of the comparator and, by means of a first output (A), with the first RC element, wherein the control unit (ST) acts at a first instant (t1) by a charging current (I1) on the first RC element by means of the first output (A) and wherein the control unit (ST) is arranged to detect the first voltage change arising at the output (C) of the comparator (K) at a second instant (t2) and to determine a charging time from the difference of the first instant (t1) and the second instant (t2),
**characterised in that**
the comparator (K) has a second input (B2), which is connected with the control unit (ST), and a first reference voltage (UREF1) is applied by means of the control unit (ST) to the second input (B2) during application of the charging current (11), and
the RC element is acted on by a discharging current (I2) at a third instant (t3) by means of the control unit (ST) and during application of the discharging current (I2) a second reference voltage (UREF2) is applied to the second input (B2) by means of the control unit (ST) and the second voltage change arising at the output (C) of the comparator (K) at a fourth instant (t4) is detected by means of the control unit (ST) and a discharging time is determined from the difference of the third instant (B3) and the fourth instant (t4), and a first correction variable is determined from the ratio of the charging time and the discharging time in order to correct the charging time and/or the discharging time by means of the first correction variable and the stack height or the thickness of the print medium is determined from a comparison of the corrected charging time and/or discharging time and a stored reference time.

2. Device according to claim 1, **characterised in that** the control unit (ST) is arranged to determine the ratio from a discharging time directly following the charging time.

3. Device according to claim 1 or claim 2, **characterised in that** the control unit (ST) is arranged to correct the charging characteristic curve and/or the discharging characteristic curve by means of the first correction variable.

4. Device according to any one of the preceding claims, **characterised in that** the charging current (11) and the discharging current (I2) are substantially equal in amount.

5. Device according to any one of the preceding claims, **characterised in that** the measuring resistor (RM) has a first terminal (RMA1) connected with the control unit (ST) and the measuring resistor (RM) has a second terminal (RMA2) connected with a first plate (CM1) of the measuring capacitor (CM) and the measuring capacitor (CM) comprises a second plate (CM2) connected with a reference potential (GND), wherein the second plate (CM2) has, for reception of print media, a surface spaced equidistantly from the surface of the first plate (CM1) and the second terminal (RMA2) is connected with an input (VME) of the measuring amplifier (VM) and an output of the amplifier (VM) is connected with the first input (B1) of the comparator (K).

6. Device according to any one of the preceding claims, **characterised in that** the output of the measuring amplifier (VM) is connected with an input of a decoupling amplifier (EV) and an output of the decoupling amplifier (EV) is connected with a screening electrode (SE) which screens the measuring capacitor (VM).

7. Device according to any one of the preceding claims, **characterised in that** a reference branch (REFZ) with a second RC element and a reference amplifier (VR) with an output is provided, and the control unit (ST) acts by means of the output (A) on the second RC element by the charging current (I1) or the discharging current (I2) at the first instant (t1) and by means of a switch (S1) in the first state connects the output of the measuring amplifier (VM) with the input of the comparator (K) or in a second state connects the output of the reference amplifier (VR) with the input of the comparator (K).

8. Device according to claim 7, **characterised in that** the second RC element comprises a reference resistor (RR) with a first terminal (RRA1) and a second terminal (RRA2) and a reference capacitor (CR) with a first plate (CR1) and a second plate (CR2), wherein the second plate (CR2) is connected with a reference potential (GND) and the second terminal (RRA2) is connected with the first plate (CR1).

9. Device according to claim 7 or claim 8, **characterised in that** the reference amplifier (VR) has an input (VRE) connected with the second terminal (RRA2) of the reference resistor (RR).

10. Device according to any one of claims 7 to 9, **characterised in that** the measuring amplifier (VM) has an input (VME) connected with the second terminal (RMA2) of the measuring resistor (RM).

11. Device according to any one of claims 7 to 10, **characterised in that** the switch (S1) has a control input (STA) connected with the control unit (ST).

12. Device according to any one of the preceding claims, **characterised in that** the level of the first reference voltage (UREF1) and/or the level of the second reference voltage (UREF 2) is or are settable.

13. Method for measuring the stack height or the thickness of a print medium (DST) by means of measuring charging times at a measuring capacitor (CM), comprising:
- the measuring capacitor (CM) with a first plate (CM1) constructed for reception of print media, the first plate (CM1) being connected with the reference potential (GND), and with a second plate (CM2),
- a measuring circuit (MSK), with a measuring amplifier (VM) with an output and a measuring resistor (RM) and the measuring capacitor (CM), wherein the measuring resistor (RM) and the measuring capacitor (CM) form a first RC element,
- a comparator (K) having a first input (B1) and an output (C), wherein the first input (B1) of the comparator (K) is connected with the output of the measuring amplifier (VM) in a first state, and
- a control unit (ST) connected with the output (C) of the comparator, wherein the control unit (ST) is connected with the first RC element by means of a first output (A) and wherein by means of the control unit (ST) the first RC element is acted on by a charging current (I1) by way of the first output (A) at a first instant (t1), by means of the control unit (ST) the first voltage change arising at the output (C) of the comparator (K) at a second instant (t2) is detected and by means of the control unit (ST) a charging time is determined from the difference of the first instant (t1) and the second instant (t2),
**characterised in that**
the comparator (K) has a second input (B2), which is connected with the control unit (ST), and a first reference voltage (UREF1) is applied by means of the control unit (ST) to the second input (B2) during application of the charging current (I1), and
the RC element is acted on by a discharging current (12) at a third instant (t3) by means of the control unit (ST) and during application of the discharging current (12) a second reference voltage (UREF2) is applied to the second input (B2) by means of the control unit (ST) and the second voltage change arising at the output (C) of the comparator (K) at a fourth instant (t4) is detected by means of the control unit (ST) and a discharging time is determined from the difference of the third instant (t3) and the fourth instant (t4) by means of the control unit (ST), and a first correction variable is determined from the ratio of the charging time and the discharging time by means of the control unit (ST) in order to correct the charging time and/or the discharging time by means of the first correction variable and the stack height or the thickness of the print medium is to be determined from a comparison of the corrected charging time and/or discharging time and a stored reference time.

14. Method according to claim 13, **characterised in that** the ratio is determined by means of the control unit (ST) from a discharging time directly following the charging time.

15. Method according to claim 13 or 14, **characterised in that** the charging characteristic curve and/or the discharging characteristic curve is or are corrected by means of the control unit (ST) by way of the first correction variable.

## Revendications

1. Dispositif destiné à mesurer la hauteur d'empilement ou l'épaisseur d'un support d'impression (DST) au moyen de la mesure de temps de chargement d'un condensateur de mesure (CM), présentant
- le condensateur de mesure (CM) avec une première plaque (CM1) destinée à recevoir des supports d'impression, dans lequel la première plaque (CM1) est connectée au potentiel de référence (GND) et avec une deuxième plaque (CM2),
- un circuit de mesure (MSK) avec un amplificateur de mesure (VM) comportant une sortie et une résistance de mesure (RM) et le condensateur de mesure (CM), dans lequel la résistance de mesure (RM) et le condensateur de mesure (CM) forment un premier bloc RC,
- un comparateur (K) qui présente une première entrée (B1) et une sortie (C), dans lequel la première entrée (B1) du comparateur (K) est connectée à la sortie de l'amplificateur de mesure (VM),
- une unité de commande (ST) qui est connectée à la sortie (C) du comparateur et au moyen d'une première sortie (A) au premier bloc RC et dans lequel l'unité de commande (ST) alimente à un premier instant (t1) le premier bloc RC au moyen de la première sortie (A) avec un courant de charge (I1), dans lequel l'unité de commande (ST) est conçue pour détecter la première variation de tension se produisant à un deuxième instant (t2) à la sortie (C) du comparateur (K) et pour déterminer un temps de charge à partir de la différence entre le premier instant (t1) et le deuxième instant (t2),
**caractérisé en ce que**
le comparateur (K) présente une deuxième entrée (B2) reliée à l'unité de commande (ST) et une première tension de référence (UREF1) est appliquée à la deuxième entrée (B2) au moyen de l'unité de commande (ST) pendant l'application du courant de charge (I1), et
le bloc RC est soumis à un courant de décharge (I2) à un troisième instant (t3) au moyen de l'unité de commande (ST) et une deuxième tension de référence (UREF2) est appliquée à la deuxième entrée (B2) au moyen de l'unité de commande (ST) pendant l'application du courant de décharge (I2) et pour détecter au moyen de l'unité de commande (ST) la deuxième variation de tension se produisant à la sortie (C) du comparateur (K) à un quatrième instant (t4) et pour déterminer un temps de décharge à partir de la différence entre le troisième instant (t3) et le quatrième instant (t4), et
pour déterminer une première grandeur de correction à partir du rapport entre le temps de charge et le temps de décharge, afin de corriger le temps de charge et/ou le temps de décharge au moyen de la première grandeur de correction et de déterminer la hauteur d'empilement ou l'épaisseur du support d'impression à partir d'une comparaison du temps de charge et/ou du temps de décharge corrigé avec un temps de référence mémorisé.

2. Dispositif selon la revendication 1, **caractérisé en ce que** l'unité de commande (ST) est conçue pour déterminer le rapport à partir d'un temps de décharge suivant immédiatement le temps de charge.

3. Dispositif selon la revendication 1 ou la revendication 2, **caractérisé en ce que** l'unité de commande (ST) est conçue pour corriger, au moyen de la première grandeur de correction, la courbe caractéristique de charge et/ou la courbe caractéristique de décharge.

4. Dispositif selon l'une quelconque des revendications précédentes, **caractérisé en ce que** le courant de charge (I1) et le courant de décharge (I2) sont essentiellement de même valeur.

5. Dispositif selon l'une quelconque des revendications précédentes, **caractérisé en ce que** la résistance de mesure (RM) présente un premier raccord (RMA1) connecté à l'unité de commande (ST) et la résistance de mesure (RM) présente un deuxième raccord (RMA2) connecté à une première plaque (CM1) du condensateur de mesure (CM) et le condensateur de mesure (CM) présente une deuxième plaque (CM2) connectée à un potentiel de référence (GND), dans lequel la deuxième plaque (CM2) présente une face espacée à équidistance de la face de la première plaque (CM1) destinée à recevoir des supports d'impression et le deuxième raccord (RMA2) est connecté à une entrée (VME) de l'amplificateur de mesure (VM) et une sortie de l'amplificateur de mesure (VM) est connectée à la première entrée (B1) du comparateur (K).

6. Dispositif selon l'une quelconque des revendications précédentes, **caractérisé en ce que** la sortie de l'amplificateur de mesure (VM) est connectée à une entrée d'un amplificateur de découplage (EV) et une sortie de l'amplificateur de découpage (EV) est connectée à une électrode de blindage (SE) qui protège le condensateur de mesure (VM).

7. Dispositif selon l'une quelconque des revendications précédentes, **caractérisé en ce qu'**il est prévu une branche de référence (REFZ) avec un deuxième bloc RC et un amplificateur de référence (VR) avec une sortie et **en ce que** l'unité de commande (ST) alimente au moyen de la sortie (A) au premier instant (t1) le deuxième bloc RC avec le courant de charge (I1) ou le courant de décharge (12) et relie dans un premier état au moyen d'un commutateur (S1) la sortie de l'amplificateur de mesure (VM) ou dans un deuxième état la sortie de l'amplificateur de référence (VR) à l'entrée du comparateur (K).

8. Dispositif selon la revendication 7, **caractérisé en ce que** le deuxième bloc RC présente une résistance de référence (RR), avec un premier raccord (RRA1) et un deuxième raccord (RRA2), et un condensateur de référence (CR), avec une première plaque (CR1) et une deuxième plaque (CR2), dans lequel la deuxième plaque (CR2) est connectée à un potentiel de référence (GND) et le deuxième raccord (RRA2) est connecté à la première plaque (CRI).

9. Dispositif selon la revendication 7 ou la revendication 8, **caractérisé en ce que** l'amplificateur de référence (VR) présente une entrée (VRE) connectée au deuxième raccord (RRA2) de la résistance de référence (RR).

10. Dispositif selon l'une quelconque des revendications 7 à 9, **caractérisé en ce que** l'amplificateur de mesure (VM) présente une entrée (VME) connectée au deuxième raccord (RMA2) de la résistance de mesure (RM).

11. Dispositif selon l'une quelconque des revendications 7 à 10, **caractérisé en ce que** le commutateur (S1) présente une entrée de commande (STA) connectée à l'unité de commande (ST).

12. Dispositif selon l'une quelconque des revendications précédentes, **caractérisé en ce que** le niveau de la première tension de référence (UREF1) et/ou le niveau de la deuxième tension de référence (UREF2) est réglable.

13. Procédé destiné à mesurer la hauteur d'empilement ou l'épaisseur d'un support d'impression (DST) au moyen de la mesure de temps de chargement d'un condensateur de mesure (CM), présentant
- le condensateur de mesure (CM) avec une première plaque (CM1) destinée à recevoir des supports d'impression, dans lequel la première plaque (CM1) est connectée au potentiel de référence (GND) et avec une deuxième plaque (CM2),
- un circuit de mesure (MSK), avec un amplificateur de mesure (VM) comportant une sortie et une résistance de mesure (RM) et le condensateur de mesure (CM), dans lequel la résistance de mesure (RM) et le condensateur de mesure (CM) forment un premier bloc RC,
- un comparateur (K), qui présente une première entrée (B1) et une sortie (C), dans lequel la première entrée (B1) du comparateur (K) est connectée dans un premier état à la sortie de l'amplificateur de mesure (VM),
- une unité de commande (ST) connectée à la sortie (C) du comparateur et dans lequel l'unité de commande (ST) est connectée au moyen d'une première sortie (A) au premier bloc RC et dans lequel, au moyen de l'unité de commande (ST), on alimente à un premier instant (t1) le premier bloc RC au moyen de la première sortie (A) avec un courant de charge (I1) et, au moyen de l'unité de commande (ST), on détecte la première variation de tension se produisant à un deuxième instant (t2) à la sortie (C) du comparateur (K) et on détermine, au moyen de l'unité de commande (ST), un temps de charge à partir de la différence entre le premier instant (t1) et le deuxième instant (t2),
**caractérisé en ce que**
le comparateur (K) présente une deuxième entrée (B2) reliée à l'unité de commande (ST) et on applique une première tension de référence (UREF1) à la deuxième entrée (B2) au moyen de l'unité de commande (ST) pendant l'application du courant de charge (I1) et
on alimente le bloc RC avec un courant de décharge (I2) à un troisième instant (t3) au moyen de l'unité de commande (ST) et on applique au moyen de l'unité de commande (ST) une deuxième tension de référence (UREF2) à la deuxième entrée (B2) au moyen de l'unité de commande (ST) pendant l'application du courant de décharge (12) et on détecte au moyen de l'unité de commande (ST) la deuxième variation de tension se produisant à la sortie (C) du comparateur (K) à un quatrième instant (t4) et on détermine au moyen de l'unité de commande (ST) un temps de décharge à partir de la différence entre le troisième instant (t3) et le quatrième instant (t4) et on détermine au moyen de l'unité de commande (ST) une première grandeur de correction à partir du rapport entre le temps de charge et le temps de décharge et on corrige le temps de charge et/ou le temps de décharge au moyen de la première grandeur de correction et on détermine la hauteur d'empilement ou l'épaisseur du support d'impression à partir d'une comparaison du temps de charge et/ou du temps de décharge corrigé avec un temps de référence mémorisé.

14. Procédé selon la revendication 13, **caractérisé en ce que** l'on détermine, au moyen de l'unité de commande (ST), le rapport à partir d'un temps de décharge suivant immédiatement le temps de charge.

15. Procédé selon la revendication 13 ou la revendication 14, **caractérisé en ce que** l'on corrige, au moyen de l'unité de commande (ST), la courbe caractéristique de charge et/ou la courbe caractéristique de décharge à l'aide de la première grandeur de correction.
